# DEMANDE DE BREVET EUROPEEN

(11) **EP 0 790 505 A1**
(43) Date de publication de la demande: **20.08.1997**
(21) Numéro de dépôt: 97200343.8
(22) Date de dépôt: 07.02.1997
(51) Int. Cl.: G01S 3/784, B64G 1/36, G01C 21/02

(54) **Viseur solaire à fente**

(30) Priorité: 14.02.1996 FR 9601813
(71) Demandeur: Philips Electronics N.V., 5621 BA Eindhoven (NL)
(72) Inventeur: Pezant, Christian, 75008 Paris (FR)
(74) Mandataire: Pyronnet, Jacques

(57) **Abrégé**

Ce viseur, connecté à un système de contrôle d'attitude muni d'un capteur d'attitude grossier, sur un engin mobile, met en oeuvre une barrette de photodétecteurs (1) et une fente (3) interposée entre la barrette et le soleil. Selon l'invention, il comporte un viseur solaire à plusieurs fentes parallèles (3, 4, 5), chacune détectant un secteur (C₁, A, C₂) du champ de visée global d'une première position angulaire du soleil à mesurer, avec petit recouvrement entre secteurs adjacents. Ce viseur solaire comporte en outre des moyens de calcul (31) qui reçoivent d'une part l'information relative à l'insolation de la barrette, d'autre part l'information, en provenance du système de contrôle d'attitude (centrale d'orientation 32), en association avec la date, indiquant dans quel secteur du champ de visée se situe le soleil et qui en déduisent la position angulaire du soleil dans le champ de visée global.

Application : orientation d'un satellite artificiel.

## Description

La présente invention concerne un viseur solaire à fente, muni de moyens d'interface pour recevoir une mesure d'attitude grossière du soleil, sur un engin mobile, du type qui met en oeuvre une barrette linéaire de photodétecteurs faisant un angle par rapport à une fente interposée entre ladite barrette et le soleil.

L'invention concerne aussi la combinaison d'un viseur solaire à fente et d'un système de contrôle d'attitude muni d'au moins un capteur d'attitude grossier.

Pour l'orientation d'un satellite artificiel, il est possible d'utiliser différents types de dispositifs. Il est connu notamment d'utiliser des gyroscopes, qui permettent de mesurer les mouvements angulaires et, par intégration, la position récurrente à partir d'une position initiale. La position initiale et son actualisation sont assurées par des capteurs (basés sur l'optique, la gravité, la magnétométrie...) parmi lesquels les viseurs d'étoiles et les capteurs de terre.

Un problème d'orientation comparable à celui des satellites se pose pour la localisation autonome en vue de son guidage, d'un engin mobile sur le sol d'une planète (Mars) ou de la lune, c'est-à-dire pour la localisation autonome d'un démonstrateur de robotique mobile planétaire. A cet effet, un tel véhicule comporte aussi un système de contrôle d'attitude, une centrale d'orientation, en l'occurrence, avec une plate-forme munie d'une centrale inertielle. Un capteur d'attitude, en liaison avec l'heure universelle et les éphémérides permet, par des traitements adéquats, de déterminer une position initiale pour le véhicule, sur la planète où il se trouve. Pour assurer au véhicule une détection plus fine de son orientation, il faut prévoir d'adjoindre sur la centrale d'orientation, un viseur d'étoile ou un viseur solaire pour le repérage des angles d'azimut et de site. Pour cette détection fine, on peut envisager d'utiliser un viseur d'étoiles, détecteur matriciel ou PSD (Position Sensitive Device en anglais). Cependant, les détecteurs matriciels conduisent à une trop grande complexité et semblent être une solution limite pour une telle application. Le PSD, de par sa conception mono-élément, ne peut isoler une partie de la scène projetée ; les mesures seraient donc perturbées par la luminance du ciel et du sol. De plus, la faible résolution de ce type de détecteur (1000 à 2000) imposerait la mise en oeuvre de plusieurs capteurs élémentaires pour couvrir le champ de vue en site (hauteur du soleil). Aux dispositifs précités on préfère, pour cette dernière application, l'utilisation de viseurs solaires à fente mettant en oeuvre une barrette de photodétecteurs. De tels viseurs sont connus notamment du brevet US 4 810 870, figures 3 à 6 et la description correspondante.

La fente et la barrette de photodétecteurs sont disposées en général selon des directions orthogonales, l'une devant l'autre. La projection de la fente donne une image en forme de trait lumineux qui coupe en un point la barrette. La position de ce point, représentative d'une position angulaire du soleil, est déterminée par un traitement relativement simple du signal délivré par le détecteur. La longueur de la barrette, associée à la distance entre fente et barrette, détermine le champ et la précision de mesure du capteur solaire. La longueur de la fente définit son champ de vue transverse (axe insensible). Pour constituer un viseur solaire à deux axes, ce qui est le plus souvent le cas, deux capteurs de ce type doivent être utilisés, un pour chaque axe de mesure ; en principe, bien que cela ne soit pas une nécessité, les axes de mesure des deux capteurs sont disposés orthogonalement.

Pour la mesure de champs en site ou en azimut (respectivement tangage ou lacet pour un satellite artificiel) une précision de l'ordre de une minute d'arc est requise. Ceci peut s'obtenir couramment, pour des champs allant jusqu'à 30° environ, au moyen d'une barrette comptant 1500 à 2000 photodétecteurs. Mais pour des champs plus larges, par exemple compris entre 60° et 90° notamment, il devient nécessaire d'utiliser des barrettes comptant 2 à 3 fois plus de détecteurs, ce qui pose trois types de problèmes : tout d'abord, il devient nécessaire d'augmenter la taille et le poids du viseur solaire. D'autre part, il n'est plus possible d'utiliser des barrettes courtes, déjà qualifiées pour des applications spatiales et la qualification de barrettes plus longues en augmente sensiblement le prix. En troisième lieu, des barrettes comportant trois fois plus de photodétecteurs sont sujettes à un temps de lecture multiplié par 3, donc à une électronique plus complexe.

Il est donc avantageux de pouvoir continuer à utiliser des barrettes courtes et déjà testées et éprouvées, pour la mesure de champs pouvant atteindre 90°, comme c'est le cas pour la mesure du champ en site d'un véhicule automatique planétaire.

Le principal but de la présente invention est de fournir un viseur solaire apte à détecter des angles d'incidence élevés du soleil avec une bonne précision, sans accroître la taille ni le prix du viseur.

Ce but est atteint grâce au fait que le viseur solaire indiqué au premier paragraphe est remarquable en ce qu'il comporte au moins un premier viseur solaire à plusieurs fentes disposées en parallèle, chaque fente servant à détecter un secteur du champ de visée global d'une première position angulaire du soleil à mesurer, ledit premier viseur solaire comportant en outre des moyens de calcul qui reçoivent d'une part l'information relative à l'insolation de ladite barrette, d'autre part l'information, en provenance desdits moyens d'interface, indiquant dans quel secteur du champ de visée se situe le soleil et qui en déduisent la position angulaire du soleil dans ledit champ de visée global.

En fonctionnement nominal, il y a au moins l'un des photodétecteurs de la barrette qui est frappé par le rayonnement solaire.

La connaissance de l'heure locale et d'une position approximative du satellite ou du mobile sur le sol de la planète, fournie par un premier capteur grossier, permettent d'estimer une position grossière du soleil, a priori entre 1 et quelques degrés près. Plusieurs fentes étant présentes devant la barrette de photodétecteurs, cette position grossière indique, au moyen d'un étalonnage préalable, à travers quelle fente un détecteur de la barrette est frappé par la lumière solaire, ce qui implique un angle fixe d'inclinaison moyenne pour le soleil représentatif du secteur du champ global que permet de mesurer la fente concernée. A cette valeur d'angle fixe doit être ajoutée la valeur particulière déduite de la position du photodétecteur (du pixel) illuminé sur la barrette, pour obtenir l'angle d'inclinaison du soleil.

Les moyens de calcul nécessaires pour la mesure de cet angle d'inclinaison peuvent indifféremment appartenir à l'ensemble de traitement électronique du système de contrôle d'attitude (de la centrale inertielle) ou à celui du viseur.

Dans le cas d'un viseur à fente destiné à un véhicule automatique planétaire, la centrale d'orientation comporte deux viseurs solaires à fente, un premier à plusieurs fentes selon l'invention, pour la mesure de l'angle de site et un deuxième à une seule fente, de type connu, pour la mesure de l'angle d'azimut dont le champ est faible, de l'ordre de 10°.

Pour un satellite artificiel basse altitude, dont il s'agit de mesurer l'attitude et notamment les angles de lacet et de tangage, on prévoit une centrale d'orientation dont la plate-forme est munie de deux viseurs solaires à plusieurs fentes selon l'invention, pour la mesure desdits angles de lacet et de tangage.

La description qui suit en regard des dessins annexés, le tout donné à titre d'exemple non limitatif, fera bien comprendre comment l'invention peut être réalisée.
Les figures 1A et 1B représentent schématiquement en section latérale un viseur solaire conforme à l'invention, la figure 1A selon l'axe sensible et la figure 1B selon l'axe insensible.
La figure 2A est une vue de dessus d'un viseur solaire incorporant l'invention, pour la mesure en site et destiné à la localisation autonome d'un véhicule automatique planétaire.
La figure 2B est une vue latérale du viseur de la figure 2A muni de son boîtier et de son module électronique, la forme particulière étant ici imposée par le fait que le viseur constitue le capot de la centrale inertielle.
La figure 3 est le schéma synoptique de l'électronique du viseur solaire des figures 2A et 2B, dans sa version analogique.
La figure 4 représente une partie modifiée du schéma de la figure 3 permettant d'obtenir une version numérique pour le calcul des angles de site et d'azimut.
   Sur les figures, les mêmes références représentent les mêmes éléments avec les mêmes fonctions.

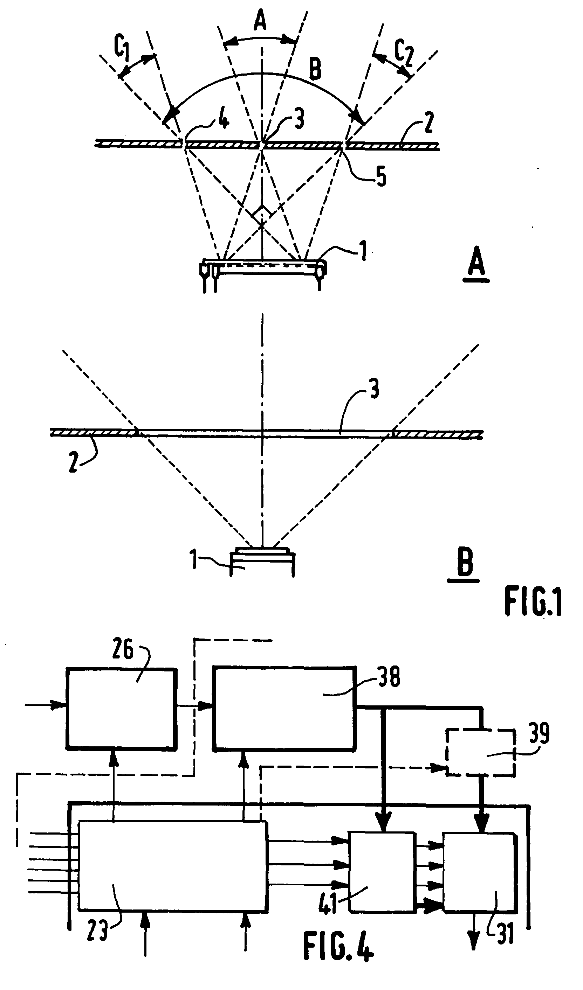

Sur les figures 1A et 1B qui servent à expliciter le fonctionnement du viseur solaire selon l'invention, seuls les éléments principaux sont représentés, à savoir une barrette de photodétecteurs 1 et une plaque opaque 2 munie de plusieurs fentes 3, 4 et 5. Le boîtier support des éléments 1 et 2 n'apparaît pas pour ne pas surcharger le dessin, ce boîtier, opaque, ayant aussi pour fonction d'empêcher des entrées de lumière parasite, autrement que par les fentes 3, 4 et 5. De préférence, comme représenté, les fentes 3, 4, 5, parallèles, sont orthogonales à la barrette 1 et disposées à quelques centimètres de cette dernière, la fente médiane 3 étant située à l'aplomb du milieu de la barrette 1. Les distances entre les fentes 3 et 4 et les fentes 3 et 5 sont égales et légèrement inférieures à la longueur de la barrette 1. Cette barrette est par exemple celle commercialisée par la société Thomson-CSF sous la référence TH7811A, qui comporte 1728 pixels.

Un viseur solaire à fente de l'art connu ne comporterait que la fente médiane 3, permettant de mesurer un angle compris dans le champ d'ouverture A, légèrement supérieur à 30 degrés sur la figure.

Par contre, le viseur solaire à 3 fentes selon l'invention permet la mesure d'angle dans le champ global B, de 90 degrés, qui se décompose en trois secteurs adjacents : C₁, détecté à travers la fente 4, puis A, détecté à travers la fente 3 puis C₂, détecté à travers la fente 5 (C₁ = C₂ sur la figure 1A). On notera que le parcours du soleil à travers chacun des trois secteurs, provoque le balayage de toute la longueur de la barrette 1 par l'image de la fente associée à chaque secteur, avec un recouvrement partiel égal à typiquement 10 % entre secteurs adjacents. En l'absence d'information supplémentaire, il y aurait donc indétermination sur la position réelle du soleil. Cette indétermination est levée par l'indication supplémentaire du secteur où se trouve le soleil lors de la mesure de l'angle, indication qui est fournie par la centrale inertielle, en association avec l'instant précis de la mesure, lesquelles se trouvent nécessairement dans la centrale d'orientation qui comporte aussi le viseur solaire.

Le viseur solaire des figures 1A et 1B se comporte donc eu égard à chaque secteur, comme un viseur de l'art connu, pour lequel un étalonnage préalable permet d'établir une convergence précise entre le numéro d'ordre (la position) de chaque photodétecteur de la barrette et un angle d'inclinaison associé pour le soleil. Selon l'invention, à chaque position de photodétecteur sont associés trois angles d'inclinaison possibles pour le soleil, parmi lesquels l'information de position grossière en provenance de la centrale inertielle indique lequel doit être sélectionné comme vrai.

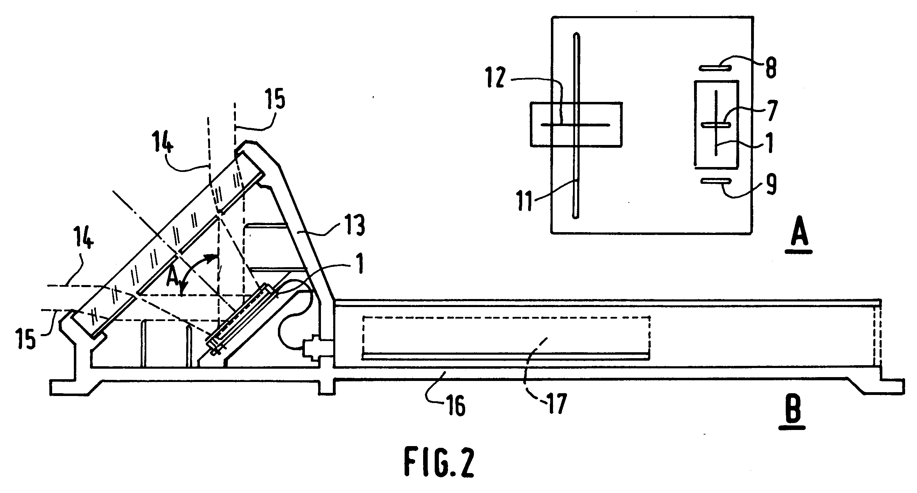

Sur la figure 2A est représenté, vu de dessus, un viseur solaire dit 2 axes, destiné à la localisation autonome d'un véhicule automatique planétaire. Pour un tel véhicule, il faut pouvoir couvrir des dépointages de ± 45° en site, raison pour laquelle est utilisé un viseur solaire tel que celui de la figure 1A, avec 3 fentes 7, 8 et 9. Par contre, le champ de vue en azimut peut se limiter à 10°, ce qui permet d'utiliser un viseur à fente connu muni d'une seule fente 11, associée à une barrette de photodétecteurs 12.

Les barrettes 1 et 12, par exemple du type précité TH7811A, sont disposées dans des directions perpendiculaires et il en est de même de la fente 11 par rapport aux fentes 7, 8 et 9. On notera que l'encombrement de la tête du viseur solaire représenté à la figure 2 est surtout imposé par la grande longueur de la fente 11 du capteur en azimut afin de couvrir des dépointages de ± 45° en site, comme c'est le cas aussi pour le viseur solaire de la figure 1B (axe insensible). A l'inverse, les longueurs des fentes 7, 8 et 9 sont faibles, en rapport avec les faibles dépointages en azimut à prévoir de ± 5°.

Pour une bonne couverture des champs en site et azimut, la tête du viseur solaire à fente est disposée dans son boîtier 13, voir la figure 2B, selon un angle de 45° par rapport à l'horizontale.

Sur la figure 2B le champ de vue du capteur en site est représenté par les traits interrompus 14 et le champ de vue du capteur en azimut (en direction perpendiculaire) par les traits interrompus 15.

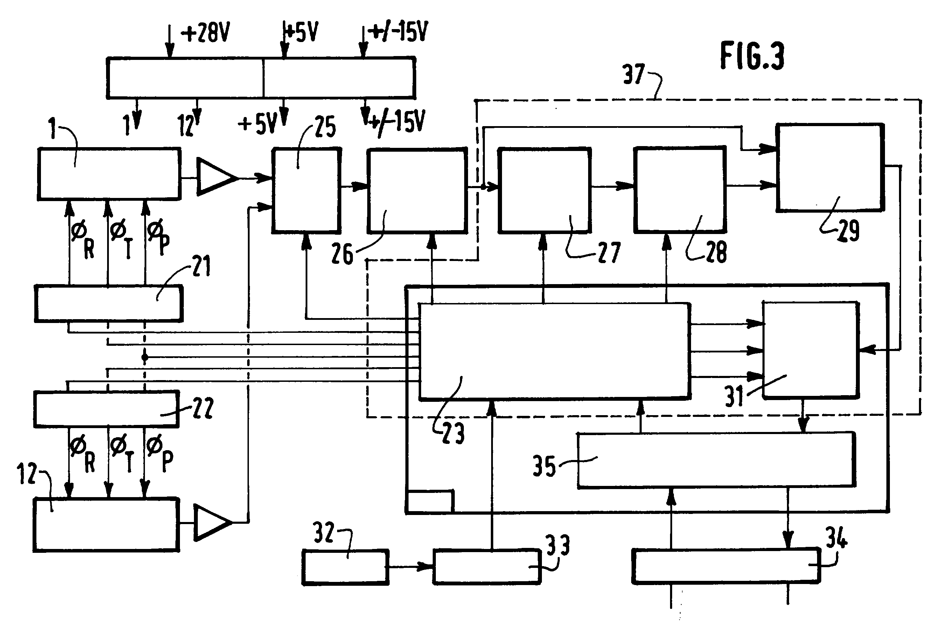

Le boîtier 13 est solidaire d'une baie 16 qui contient le matériel électronique 17 nécessaire à la commande des barrettes de photodétecteurs 1 et 12 et au traitement des signaux électriques qui en sont issus, traitement qui est explicité ci-après en référence aux figures 3 et 4.

A la partie gauche de la figure 3 sont représentés le détecteur en site 1 et le détecteur en azimut 12, commandés, par l'intermédiaire de circuits adaptateurs de niveau 21, respectivement 22, à partir d'un séquenceur 23, pour ce qui est des phases d'intégration φ_{P}, de transfert dans un registre à décalage φ_{T} et de lecture du registre φ_{R}. Après amplification, les signaux de sortie des détecteurs 1 et 12 sont multiplexés par un multiplexeur 25, ce qui permet de n'avoir qu'une chaîne de traitement de signal. En aval du multiplexeur 25 figurent en cascade les blocs suivants :
- un bloc 26 d'alignement du signal sur une tension de référence VREF,
- un circuit 27 de détection crête qui effectue la détection du signal maximal VCRE,
- un circuit 28 de mémorisation du seuil VCRE/2
- et un comparateur 29 qui compare les signaux de sortie des circuits 26 et 28 pour fournir à un circuit 31 de détection du soleil le signal du photodétecteur, en 1 ou 12 pour lequel le seuil VCRE/2 est dépassé.
Le seuil est déterminé et maintenu en 28 par un circuit analogique jusqu'à la lecture suivante des registres à décalage. Dans ce cas, le seuil est identique pour les deux barrettes de détecteurs en 1 et 12. Il est donc nécessaire de prévoir une adaptation de la transmission en fonction de l'angle d'incidence du soleil. Les capacités de traitement sont alors en pratique limitées à un seuillage simple, sans possibilité d'interpolation. Le circuit 31 reçoit aussi du séquenceur 23 des indications sur l'identité du photosite (pixel) concerné, en 1 ou 12 et aussi, s'il s'agit d'un pixel du photodétecteur en site, 1, une identification de la fente, parmi les 3 possibles, à travers laquelle il a été illuminé. Cette dernière information, en provenance de la centrale inertielle 32 est transmise au circuit 31 par l'intermédiaire d'une interface 33 et du séquenceur 23. L'indication de la date est aussi fournie au séquenceur 23 par l'intermédiaire d'une interface 34 et d'un organe de gestion et de communication 35. Le circuit 31 constitue des moyens de calcul qui fournissent à l'organe de gestion et de communication 35 puis à l'interface 34 les coordonnées du soleil en site et en azimut.

La réalisation de traitement analogique selon le schéma de la figure 3 permet une économie sur la consommation électrique, sur l'encombrement et la masse par intégration dans un seul circuit hybride de toutes les fonctions électroniques, et sur le coût des modèles de série, dû à l'intégration électronique.

Une réalisation numérique est aussi envisageable, moyennant de remplacer la partie du circuit entourée par un trait interrompu 37, A la figure 3 par le circuit de la figure 4, ou l'on retrouve les blocs 23, 26 et 31. Outre ces trois circuits déjà décrits figurent un convertisseur analogique-numérique 38 dont la sortie sous forme de signal vidéo numérique est fournie d'une part au circuit 31 par l'intermédiaire d'une mémoire FIFO 39 et d'autre part à un circuit de détermination du seuil 41 disposé en tampon entre le séquenceur 23 et le circuit 31. La FIFO 39, optionnelle, permet de déterminer le seuil et de mesurer la position du soleil sur la même phase d'intégration du signal, si désiré. Dans cette version numérique, afin d'obtenir une bonne précision, inférieure à la minute d'arc, sur les angles mesurés, il est possible d'effectuer un calcul d'interpolation, qui demande la sélection de plusieurs pixels et un traitement du signal avec une bonne résolution en amplitude. A cet effet, le convertisseur 38 a de préférence une résolution de 12 bits pour couvrir les évolutions du signal maximal, pour dégager une marge de conception, et pour obtenir une résolution en amplitude meilleure que le pour-cent (typiquement 8 bits). Cette solution numérique, pour laquelle une consommation de l'ordre de 5 w est à prévoir, offre un potentiel d'adaptation et d'évolution futures.

Il est courant d'orienter un satellite artificiel au moyen de viseurs d'étoiles ou de senseurs d'horizon terrestre. Certains satellites, notamment de petits satellites basse altitude, du type observation par exemple, s'orientent au moyen d'un viseur d'étoiles. Cette orientation demeure possible tant que la visée stellaire ne s'effectue pas au voisinage du soleil, ce dernier occultant la vision des étoiles dans un cône lumineux d'angle au sommet compris entre 60° et 90°. Pour remédier à cet inconvénient, il est envisageable de munir le satellite de deux viseurs d'étoiles, visant dans des directions assez nettement différentes. Cependant, il est envisageable, au lieu d'un deuxième viseur d'étoiles, d'adjoindre au satellite un viseur solaire, de préférence un viseur solaire 2 axes selon l'invention qui procure l'avantage d'être moins cher qu'un viseur d'étoiles tout en ayant la même précision, de l'ordre de la minute d'arc, et typiquement comprise entre 40 et 80 secondes d'arc, en lacet ou tangage. Pour cette application, la plate-forme de la centrale d'orientation du satellite supporte deux viseurs solaires selon l'invention du type représenté aux figures 1A et 1B, disposés perpendiculairement l'un par rapport à l'autre quant aux direction de leurs barrettes de photodétecteurs d'une part et de leurs fentes d'autre part. A noter, dans ce cas, que l'ouverture du champ selon l'axe insensible, qui régit la longueur des fentes, est la même que l'ouverture du champ selon l'axe sensible, pour chacun des viseurs multi-fentes qui constituent le viseur solaire pour satellite.

L'invention ne se limite pas à des viseurs solaires à 2 ou 3 fentes ; en effet, étant donnée la précision de la centrale inertielle, de l'ordre de 1°, c'est-à-dire suffisante pour ce qui est de l'indication du secteur angulaire du champ où se trouve le soleil, il est aussi possible d'utiliser une barrette comportant par exemple 1200 détecteurs, en association avec 4 ou 5 fentes, et même une barrette de 256 photodétecteurs associée à une quinzaine de fentes.

## Revendications

1. Viseur solaire à fente, muni de moyens d'interface pour recevoir une mesure d'attitude grossière du soleil, sur un engin mobile, du type qui met en oeuvre une barrette linéaire de photodétecteurs faisant un angle par rapport à une fente interposée entre ladite barrette et le soleil,
caractérisé en ce qu'il comporte au moins un premier viseur solaire à plusieurs fentes disposées en parallèle, chaque fente servant à détecter un secteur du champ de visée global d'une première position angulaire du soleil à mesurer, ledit premier viseur solaire comportant en outre des moyens de calcul qui reçoivent d'une part l'information relative à l'insolation de ladite barrette, d'autre part l'information, en provenance desdits moyens d'interface, indiquant dans quel secteur du champ de visée se situe le soleil et qui en déduisent la position angulaire du soleil dans ledit champ de visée global.

2. Viseur solaire à fente selon la revendication 1 conçu pour la mesure de deux positions angulaires du soleil dans des plans orthogonaux, comportant, dans un premier plan, deux barrettes de photodétecteurs disposées selon des directions perpendiculaires et, à l'aplomb de chaque barrette, orthogonalement, un jeu de fentes parallèles, disposé chacun dans un plan parallèle audit premier plan.

3. Viseur solaire à fente selon la revendication 1 comportant 3 fentes et une barrette ayant un nombre de photodétecteurs compris entre 1500 et 2000 pour la mesure d'un champ de visée global compris entre 60° et 90° avec une précision comprise entre 40 et 80 secondes d'arc.

4. Viseur solaire à fente destiné à un engin mobile du type véhicule automatique planétaire, selon lequel lesdits moyens d'interface sont connectés à deux viseurs solaires à fente, un premier, à plusieurs fentes, pour la mesure de l'angle de site, selon la revendication 1 ou 3, et un deuxième, à une seule fente, pour la mesure de l'angle d'azimut.

5. Viseur solaire à fente pour satellite artificiel basse altitude, pour lequel lesdits moyens d'interface sont connectés à deux viseurs solaires à plusieurs fentes selon la revendication 1 ou 3 pour la mesure des angles de lacet et de tangage dudit satellite artificiel.

6. Combinaison d'un viseur solaire à fente selon l'une des revendications 1 à 5 et d'un système de contrôle d'attitude muni d'au moins un capteur d'attitude grossier.
